# EUROPEAN PATENT APPLICATION

(11) **EP 4 356 732 A1**
(43) Date of publication of application: **24.04.2024**
(21) Application number: 22202752.6
(22) Date of filing: 20.10.2022
(51) Int. Cl.: A01N 25/00, A01N 61/00, A01P 7/04, A01M 1/14

(54) **METHOD FOR PRODUCING AN AQUEOUS SUSPENSION OF ADHESIVE PARTICLES FOR TRAPPING PLANT PESTS**

(71) Applicant: Wageningen Universiteit, 6708 PB Wageningen (NL)
(72) Inventor: KODGER, Thomas Edward, 6708 PB Wageningen (NL); VAN ZWIETEN, Ralph, 6708 PB Wageningen (NL)
(74) Representative: Nederlandsch Octrooibureau

(57) **Abstract**

The invention relates to a method for producing an aqueous suspension of adhesive particles comprising:
a) providing a vegetable oil comprising fatty acids chains, wherein the vegetable oil has a iodine value in the range of from 80 to 125, and wherein at least 15 wt% of the fatty acid chains are polyunsaturated;
b) contacting the vegetable oil with an oxygen-containing gas at an oxidation temperature in the range of from 50 °C to 180 °C to obtain oxidized vegetable oil;
c) allowing the oxidized vegetable oil to cool to a temperature in the range of from 15 to 35 °C to obtain cooled oxidized vegetable oil; and
d) adding the cooled oxidized vegetable oil to an aqueous phase comprising a surfactant and subjecting the aqueous phase with added oxidized vegetable oil to mechanical shear to obtain a suspension of adhesive particles of oxidized vegetable oil, wherein the adhesive particles have a particle size distribution such that, based on the total number of particles with a largest diameter of at least 40 µm, at least 90 % of the particles have a largest diameter of at most 3,000 µm, preferably at most 2,000 µm, and at least 50 % of the particles have a largest diameter of at most 1,000 µm.

The invention further relates to an aqueous suspension of adhesive particles obtainable by such method, and to a method for trapping plant pests comprising applying such aqueous suspension of adhesive particles, optionally after dilution with water, on a plant.

## Description

### Field of the invention

The present invention relates to a method for producing an aqueous suspension of adhesive particles, to an aqueous suspension of adhesive particles obtainable by such method, and to a method for trapping plant pests comprising applying such aqueous suspension of adhesive particles, optionally after dilution with water, on a plant.

### Background of the invention

Agricultural use of chemical pesticides has increased significantly over the past 40 years. The use of chemical pesticides, however, leads to pesticide residues that contaminate the environment and have a negative impact on biodiversity.

The application of adhesive compounds to leaves or stems of agricultural crops has been proposed as an alternative to the use of chemical pesticides. Pest insects and other plant pests such as mite will stick to the adhesive and will be immobilized.

In US 2014/186286 is for example disclosed a biomimetic adhesive having an insect-sticking effect. The adhesive is prepared by reacting acrylic monomers in water at specific reacting conditions in the presence of an inorganic peroxide as polymerization catalyst, a non-ionic and anionic emulsifier, a biocide, and a defoamer, to obtain an aqueous polymer emulsion. The emulsion, after adding a fluorescent substance and/or pheromones, is sprayed onto branches and leaves of target plants.

The insect-sticking adhesive of US 2014/186286 is not a bio-based compound and not-biodegradable, potentially leading to hazardous and persistent compounds in the soil.

In WO 93/13657 is disclosed a non-toxic pesticidal composition in the form of a film-forming aqueous solution of a cellulose ether having a kinematic viscosity of 10 to 2000 centistrokes. The composition may be sprayed on plants in the form of droplets of a size of 50 to 100 microns to form a sticky hydroscopic film for trapping insects and mites.

The application of film-forming polymers on plant leaves, however, may lead to retardation in growth due to hampered oxygen uptake.

There is a need for adhesives that can be applied on plant parts such as leaves and branches to trap insects and other plant pests and that are non-toxic, can be produced from renewable raw materials, and have no negative effect on plant growth.

### Summary of the invention

The inventors have found that an aqueous suspension of adhesive particles of oxidized vegetable oil that is prepared by oxidising vegetable oil with a iodine value between 80 and 125 and comprising polyunsaturated fatty acids under controlled oxidation conditions, and then suspending the oxidized vegetable oil under mechanical shear in an aqueous phase with surfactants to achieve a specific particle size distribution, can suitably be used for applying on plants for trapping insects and other plant pests.

Accordingly, the invention provides in a first aspect a method for producing an aqueous suspension of adhesive particles comprising:
a) providing a vegetable oil comprising fatty acids chains, wherein the vegetable oil has a iodine value in the range of from 80 to 125, preferably of from 85 to 120, more preferably of from 90 to 115, and wherein at least 15 wt% of the fatty acid chains are polyunsaturated;
b) contacting the vegetable oil with an oxygen-containing gas at an oxidation temperature in the range of from 50 °C to 180 °C to obtain oxidized vegetable oil;
c) allowing the oxidized vegetable oil to cool to a temperature in the range of from 15 to 35 °C to obtain cooled oxidized vegetable oil; and
d) adding the cooled oxidized vegetable oil to an aqueous phase comprising a surfactant and subjecting the aqueous phase with added oxidized vegetable oil to mechanical shear to obtain a suspension of adhesive particles of oxidized vegetable oil, wherein the adhesive particles have a particle size distribution such that, based on the total number of particles with a largest diameter of at least 40 µm, at least 90 % of the particles have a largest diameter of at most 3,000 µm, preferably at most 2,000 µm, and at least 50 % of the particles have a largest diameter of at most 1,000 µm.

It has been found that the oxidized vegetable oil prepared from a vegetable oil as specified under a) under oxidation conditions specified under b) is both elastic and adhesive and, moreover, can be sheared in an aqueous phase to yield an aqueous suspension with a particle size distribution suitable for spraying on plants and suitable for trapping insects and other plant pests on such plants.

An advantage of the method according to the invention is that the adhesive particles produced are made from a biobased raw material, i.e. vegetable oil. Vegetable oil is abundantly available, not expensive, and renewable. A further advantage is that the adhesive particles are of a hydrophobic nature. The hydrophobic nature provides opportunities of solubilizing insect repellents or other hydrophobic compounds into the particles that can be slowly released when the particles have been applied onto a plant.

In a second aspect, the invention provides an aqueous suspension of adhesive particles obtainable by a method according to the first aspect of the invention.

In a third aspect, the invention provides a method for trapping plant pests, comprising:
- providing an aqueous suspension of adhesive particles according to the first aspect of the invention;
- optionally diluting the suspension with water; and
- applying the optionally diluted suspension on a plant.

### Summary of the drawings

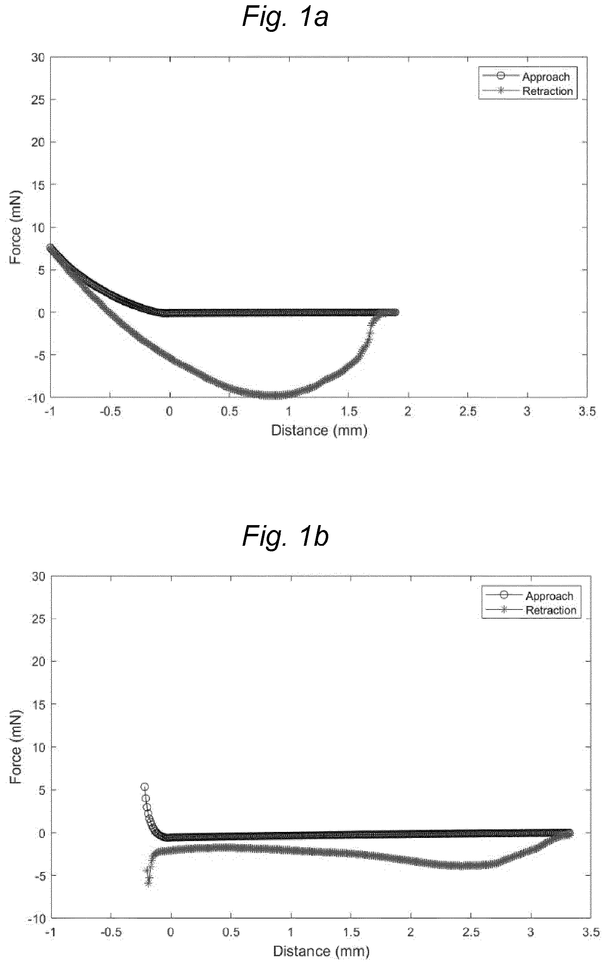

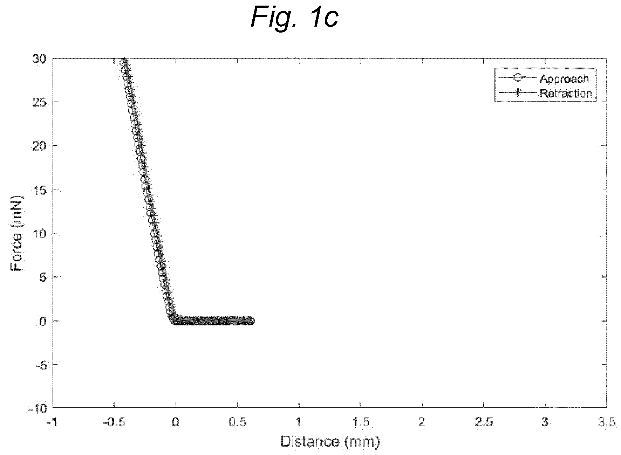

Figure 1 shows approach and retraction curves for three different layers of oxidized vegetable oil prepared in EXAMPLE 2.

### Detailed description of the invention

The method for producing an aqueous suspension of adhesive particles according to the invention comprises:
a) providing a vegetable oil;
b) contacting the vegetable oil with an oxygen-containing gas at an oxidation temperature in the range of from 50 to 180 °C to obtain oxidized vegetable oil; and
c) allowing the oxidized vegetable oil to cool to a temperature in the range of from 15 to 35 °C to obtain cooled oxidized vegetable oil; and
d) adding the cooled oxidized vegetable oil to an aqueous phase comprising a surfactant and subjecting the aqueous phase with added oxidized vegetable oil to mechanical shear to obtain a suspension of adhesive particles of oxidized vegetable oil having a specific particle size distribution.

The vegetable oil provided in a) may be one vegetable oil or may be a mixture of two or more vegetable oils. The vegetable oil provided in a) has an iodine value in the range of from 80 to 125, preferably of from 85 to 120, more preferably of from 90 to 115. The iodine value is the mass of iodine in grams consumed by 100 grams of vegetable oil, and is a measure of the unsaturation (the content of unsaturated carbon-carbon bonds) in the fatty acid chains of the vegetable oil. Reference herein to the iodine value is to the iodine value as determined according to the Wijs method. The vegetable oil comprises fatty acids chains and at least 15 wt% of the fatty acid chains is polyunsaturated, i.e. comprises two or more double carbon-carbon bonds. Preferably at least 20 wt% of the fatty acid chains is polyunsaturated, more preferably at least 25 wt%. It will be appreciated that the upper limit of the iodine value of the vegetable oil will provides an upper limit to the percentage of polyunsaturated fatty acid chains in the vegetable oil. Preferably, at most 60 wt% of the fatty acids chains is polyunsaturated. If the vegetable oil is a mixture, the percentage of polyunsaturated fatty acids is calculated based on the total weight of fatty acids in the mixture.

The vegetable oil preferably comprises fatty acid chains with a number of carbon atoms in the range of 12 to 24.

The vegetable oil may be any suitable vegetable oil, provided its iodine value is in the range of from 80 to 125 and at least 15 wt% of its fatty acid chains is polyunsaturated. If the vegetable oil is one vegetable oil, the vegetable oil is preferably selected from the group consisting of rice germ oil, rice bran oil, canola oil, castor oil, corn oil, peanut oil, pecan oil, rapeseed oil, sesame oil, and cottonseed oil, more preferably is rice germ oil or rice bran oil, even more preferably is rice germ oil.

If the vegetable oil is a mixture of vegetable oils it may comprise an individual vegetable oil with a lower iodine number or lower amount of polyunsaturated fatty acid chains (such as for example olive oil) or with a higher iodine value (such as for example linseed oil), provided the vegetable oil mixture has an iodine number of from 80 to 125 oil and at least 15 wt% polyunsaturated fatty acids.

In b), the vegetable oil provided in a) is contacted with an oxygen-containing gas at an oxidation temperature in the range of from 50 °C to 180 °C, preferably of from 60 °C to 160 °C, more preferably of from 70 °C to 155 °C, even more preferably of from 85 °C to 150 °C, still more preferably of from 90 °C to 130 °C, to obtain oxidized vegetable oil.

The oxygen-containing gas may be any suitable oxygen-containing gas, such as air or oxygen-enriched air. Preferably, the oxygen-containing gas is air.

The contacting with oxygen-containing gas may be done in any suitable way, typically by bubbling the oxygen-containing gas though the vegetable oil held at the oxidation temperature in a suitable reactor. Preferably, the oxygen-containing gas is contacted with the vegetable oil in such amount that the concentration of oxygen dissolved in the vegetable oil is not a rate limiting factor for the oxidation reaction in b).

The contacting of the vegetable oil with an oxygen-containing gas in b) may be carried out in the absence or the presence of a drying catalyst. Reference herein to a drying catalyst is to metal-based catalyst such as typically used for drying of autoxidizable resins such as alkyds. Such drying catalyst are also referred at as "drier" or "siccative". Well-known drying catalysts include salts of a polyvalent transition metal such as cobalt, cerium, iron, manganese, or vanadium, in particular a halide, nitrate, sulphate, or carboxylate of such transition metal, or metal/ligand complexes wherein the metal is a polyvalent transition metal.

In order to obtain an oxidized vegetable oil with elastic and adhesive properties such as desired for an insect-trapping adhesive, oxidation step b) is preferably carried out at a relatively low rate. Therefore, the vegetable oil is preferably contacted with an oxygen-containing gas in b) in the absence of a drying catalyst, or in the presence of a relative low amount of drying catalyst.

If oxidation step b) is carried out in the presence of a drying catalyst, any suitable drying catalyst may be used. Preferably the drying catalyst is a manganese- or iron-based catalyst, such as for example a manganese carboxylate, an iron carboxylate, a manganese-ligand complex, and/or an iron-ligand complex. A manganese carboxylate, preferably a manganese naphthenate, manganese neodecanoate, manganese octanoate, or manganese ethyl hexanoate is a particularly suitable drying catalyst.

Oxidation step b) is preferably stopped when or soon after a curve of viscosity of the oxidized vegetable oil as a function of time shows an inflection point. Typically, the viscosity of the vegetable oil shows a steep rise when crosslinking between fatty acid chains occurs due to oxidation. After an initial steep rise, the curve of viscosity of the oxidized vegetable oil as a function of time inflects. Without wishing to be bound to any theory, it is believed that at or close to the inflection point, the balance between elasticity and adhesiveness of the oxidized oil is particularly suitable for use as pest adhesive. Preferably, oxidation step b) is stopped within 12 hours after the inflection point occurs, more preferably within 2 to 12 hours after the inflection point occurs. The viscosity can suitably be determined by monitoring the torque of the oxidized vegetable oil during oxidation step b). The conditions in oxidation step b) are preferably chosen such that the inflection point is achieved at a timescale of days, rather than hours. It has been found that by applying an oxidation temperature in the range of from 50 °C to 180 °C, preferably of from 60 °C to 160 °C, more preferably of from 70 °C to 155 °C, even more preferably of from 85 °C to 150 °C, using a vegetable oil with a iodine value as specified and at least 15 wt% of polyunsaturated fatty acid chains, preferably using no or a limited amount of drying catalyst, the oxidation reaction is relatively slow and an oxidized vegetable oil with a desired elasticity and adhesiveness is obtained that can be sheared into particles of a size distribution suitable for spraying on a plant.

Preferably, the oxidation in step b) is carried out for a time period in the range of from 12 hours to 20 days, more preferably of from 1 to 18 days, even more preferably of from 2 to 15 days.

In c), the oxidation is stopped by allowing the oxidized vegetable oil to cool to a temperature in the range of from 15 °C to 35 °C. Active cooling may be applied. Preferably, the oxidized vegetable oil is passively cooled by stopping any external heating and allowing the oxidized vegetable oil to cool to ambient temperature.

In d), an aqueous suspension of particles of the oxidized vegetable oil is prepared by adding the cooled oxidized vegetable oil to an aqueous phase comprising a surfactant and subjecting the aqueous phase with added oxidized vegetable oil to mechanical shear to obtain a suspension of adhesive particles of oxidized vegetable oil.

The aqueous phase to which the the oxidized vegetable oil is added comprises a surfactant. Preferably, the surfactant is a non-ionic surfactant, since non-ionic surfactants do not increase the permeability of plant leaves or other plant parts on which the suspension is applied. Non-ionic surfactants are well-known in the art and any suitable non-ionic surfactants may be used. Suitable non-ionic surfactants include polyoxyethylene ethers, polyoxypropylene ethers, polyoxyethylenepropylene ethers, fatty alcohol polyoxyethylene ether mixtures, nonyl phenol polyoxyethylene ether, and combinations of two or more thereof.

The amount of surfactant in the aqueous phase is an amount suitable to suspend particles of the oxidized vegetable oil in the aqueous phase and will *inter alia* depend on the amount of oxidized vegetable oil to be suspended. Typically, the amount of surfactant in the aqueous phase is in the range of from 0.05 to 5 wt% based on the total weight of the aqueous phase wherein the oxidized vegetable oil is suspended. Preferably in the range of from 0.1 to 3 wt%, even more preferably of from 0.2 to 2 wt%.

The mechanical shearing may be carried out in any suitable way, typically in a high shear dispersing device, for example a rotor-stator mixer. The particle size and particle size distribution of the adhesive particles of oxidized vegetable oil may for example be controlled by varying the gap width between rotor and stator, the rotational speed, and/or the residence time in the dispersing device.

The amount of oxidized vegetable oil added to the aqueous phase comprising a surfactant may be any amount that can suitably be suspended by mechanical shearing and that is stable upon storage of the suspension at ambient conditions. It will be appreciated that the amount that can be suspended strongly depends on the type and amount of surfactant used. Preferably the amount of oxidized vegetable oil added to the aqueous phase is in the range of from 0.5 to 50 wt%, based on the weight of the aqueous phase, more preferably of 1 to 20 wt%, even more preferably of from 3 to 15 wt%.

The adhesive particles obtained in d) have a particle size distribution such that at least 90 % of the particles have a largest diameter of at most 3,000 µm, preferably of at most 2,000 µm, and at least 50 % of the particles have a largest diameter of at most 1,000 µm. The largest diameter of the particles is determined by means of brightfield microscopy. The percentage of the particles having a specific largest diameter is based on the total number of particles with a largest diameter of at least 40 µm.

In order to avoid or minimize settling of the adhesive particles, the aqueous suspension produced by the method of the invention preferably comprises a thickener. The thickener may be added to the aqueous phase prior to subjecting it to mechanical shear. It may for example be added to the aqueous phase simultaneous with, prior to, or after adding the surfactant. Alternatively, the thickener is added after the aqueous phase with added oxidized vegetable oil has been subjected to mechanical shear. It will be appreciated that it depends on the type of thickener used (whether the thickener is suitable to be subjected to mechanical shear) when it will be added. Suitable thickeners include polysaccharides or salts of polysaccharides, such as for example alginic acid, salts of alginic acid, pectin, gums such as carrageenan, agar, locust bean gum, xanthan gum, guar gum, gellan gum, or konjac gum.

A thickener will typically be used in an amount in the range of from 0.2 to 5 wt% based on the weight of water in the aqueous phase or aqueous suspension, preferably of from 0.3 to 3 wt%.

In a second aspect, the invention relates to an aqueous suspension of adhesive particles obtainable by a method according to the first aspect of the invention. The aqueous suspension preferably comprises a thickener as described hereinabove.

The aqueous suspension of adhesive particles according to the invention can suitably be applied on a plant, typically on leaves, stems, fruits, and/or flowers of a plant, for trapping pest insects, pest arachnids (such as mites), and other plant pests. The applying is preferably done by spraying. In order to obtain a suspension with a suitable viscosity for spraying, the aqueous suspension obtained after mechanical shearing may be diluted with water.

The aqueous suspension of adhesive particles, optionally after diluting with water, is preferably applied on leaves of a plant.

Alternatively, the aqueous suspension of adhesive particles, optionally after diluting with water, may be sprayed on strips to be placed in the neighbourhood of plants to be protected from pest insects, pest arachnids, or other plant pests.

The method for trapping plant pests is particularly suitable for trapping small plant pests, in particular pest insects and/or pest arachnids, such as thrips, mite, whitefly, mealybugs, sawfly, and lice.

The invention will be further illustrated by means of the following non-limiting examples.

### Examples

### Vegetable oils used

The following vegetable oils were used in the Examples:
- Rice germ oil (ex. Makana), feed grade;
- Sunflower oil, food grade;
- Olive oil, food grade; and
- Linseed oil (ex. Makana), feed grade.

The iodine value of the vegetable oils was determined using Wijs reagent as iodine source and sodium thiosulfate for back titration. The weight percentages of saturated, monounsaturated and polyunsaturated fatty acids were determined by gas chromatography as follows: 30 mg of oil was first dissolved in 2 ml n-heptane and degraded by 0.5 M NaOH in methanol. After 15 minutes, the upper oil phase was removed and injected into the gas chromatograph. Fatty acid chains were grouped based on their unsaturation. In Table 1, the iodine values and the percentages of saturated, monounsaturated and polyunsaturated fatty acids is shown.

**Table 1 Vegetable oil used - iodine value and (un)saturation of fatty acids**

| Vegetable oil | Iodine value (g iodine/100g oil) | Fatty acids (wt%) | | |
|---|---|---|---|---|
| | | saturated | monounsaturated | polyunsaturated |
| Rice germ oil | 100 | 23 | 45 | 32 |
| Sunflower oil | 111 | 12 | 32 | 56 |
| Olive oil | 77 | 18 | 71 | 11 |
| Linseed oil | 183 | 10 | 17 | 73 |

### EXAMPLE 1

### Preparation of oxidized vegetable oil

Oxidized vegetable oil was prepared under various oxidation conditions.

### Oxidized vegetable oil 1

Six hundred millilitres of rice germ oil was poured in a glass beaker and heated to an oxidation temperature of 90 °C by placing the beaker in a temperature-controlled oil bath. Pressured air was bubbled through the rice germ oil at a rate of 5 litres per minute under stirring at 80 rpm using a IKA overhead stirrer. After 11.5 days, a torque value of 6.2 N.cm was achieved and the oxidation was stopped by allowing the oxidized oil to cool to room temperature.

### Oxidized vegetable oil 2

Six hundred millilitres of rice germ oil was poured in a glass beaker and heated to an oxidation temperature of 120 °C by placing the beaker in a temperature-controlled oil bath. Pressured air was bubbled through the rice germ oil at a rate of 6 litres per minute under stirring at 80 rpm using a IKA overhead stirrer. After 4.5 days, a torque value of 10.0 N.cm was achieved and the oxidation was stopped by allowing the oxidized oil to cool to room temperature.

### Oxidized vegetable oil 3

Six hundred millilitres of rice germ oil was poured in a glass beaker and heated to an oxidation temperature of 150 °C by placing the beaker in a temperature-controlled oil bath. Pressured air was bubbled through the rice germ oil at a rate of 6 litres per minute under stirring at 80 rpm using a IKA overhead stirrer. After 3.5 days, a torque value of 7.5 N.cm was achieved and the oxidation was stopped by allowing the oxidized oil to cool to room temperature.

### Oxidized vegetable oil 4

Six hundred millilitres of rice germ oil was poured in a glass beaker and 9.6 grams Borchers^{®} Deca Manganese 8HS (manganese neodecanoate; 8 wt% Mn) was mixed in as drying catalyst. The mixture was heated to an oxidation temperature of 90 °C by placing the beaker in a temperature-controlled oil bath. Pressured air was bubbled through the rice germ oil at a rate of 6 litres per minute under stirring at 80 rpm using a IKA overhead stirrer. After 5 days, a torque value of 7.5 N.cm was achieved and the oxidation was stopped by allowing the oxidized oil to cool to room temperature.

### Oxidized vegetable oil 5

Six hundred millilitres of rice germ oil was poured in a glass beaker and 9.6 grams Borchers^{®} Deca Zirconium 15HS (zirconium neodecanoate; 15 wt% zirconium) was mixed in. The mixture was heated to an oxidation temperature of 90 °C by placing the beaker in a temperature-controlled oil bath. Pressured air was bubbled through the rice germ oil at a rate of 6 litres per minute under stirring at 80 rpm using a IKA overhead stirrer. After 18 days, a torque value of 4.2 N.cm was achieved and the oxidation was stopped by allowing the oxidized oil to cool to room temperature.

### Oxidized vegetable oil 6

A mixture of vegetable oil was prepared by mixing 325 ml of sunflower oil, 270 ml of olive oil and 7.2 ml of linseed oil. The oil mixture was heated to an oxidation temperature of 90 °C by placing the beaker in a temperature-controlled oil bath. Pressured air was bubbled through the oil at a rate of 6 litres per minute under stirring at 80 rpm using a IKA overhead stirrer. After 7 days, a torque value of 7 N.cm was achieved and the oxidation was stopped by allowing the oxidized oil to cool to room temperature.

### Oxidized vegetable oil 7

Seventy millilitre of linseed oil was poured in a glass beaker. The oil was heated to an oxidation temperature of 70 °C by placing the beaker in a temperature-controlled oil bath. Pressured air was bubbled through the linseed oil at a rate of 6 litres per minute under stirring at 80 rpm using a IKA overhead stirrer. After 10 days, a sharp rise in viscosity was observed and the oxidation was stopped by allowing the oxidized oil to cool to room temperature.

### Preparation of aqueous suspension of oxidized vegetable oil particles

Aqueous suspensions were prepared from oxidized vegetable oils 1 to 6 as follows.

To an aqueous phase comprising 2 wt% of sodium alginate (ex. Sigma Aldrich) as thickener and 1 wt% Pluronic F-108 (a poly(ethylene glycol)-poly(propylene glycol) triblock copolymer; ex. Sigma Aldrich) as non-ionic surfactant was added 5 wt% of oxidized vegetable oil. The mixture of aqueous phase and oxidized vegetable oil was mixed for 5 minutes in a kitchen blender and the thus-obtained mixture was fed to a rotor-stator dispersing device equipped with a cone mill with a variable gap size (IKA magic LAB^{®} with MKO module). By varying the gap size, rotation speed of the rotor, and shearing time, various suspensions were prepared.

In Table 2 is summarized the starting vegetable oil, the oxidation conditions, and the conditions under which the oxidized vegetable oils are suspended (dispersing conditions) in the various experiments.

For experiments 1, 2, 3, 4, 5, and 6, the mixture of oxidized vegetable oil and aqueous phase with thickener and surfactant was milled using a gap width between rotor and stator of 0.159 mm for 5 minutes at a rotation speed of 10,000 rpm and a further 5 minutes at 15,000 rpm. In experiments 2a, 2b, and 2c, the following milling conditions were used:
2a - gap width 0.318 mm for 10 minutes at 10,000 rpm and a further 10 minutes at 15,000 rpm;
2b - gap width 0.636 mm for 10 minutes at 15,000 rpm;
2c - gap width 0.636 mm for 10 minutes at 10,000 rpm; followed by gap width 0.159 mm for 5 minutes at 5,000 rpm and a further 5 minutes at 10,000 rpm.

**Table 2 Starting vegetable oil, oxidation conditions, and dispersing conditions**

| Exper iment | Ox. veg. oil | Starting oil | catal yst | T (°C) | Time (days) | Torque (N.cm) | Gap width (mm) | Rotational speed and time | Adhesive particles |
|---|---|---|---|---|---|---|---|---|---|
| 1 | 1 | Rice germ | none | 90 | 11.5 | 6.2 | 0.159 | 5 min 10,000 rpm + 5 min | yes |
| | | | | | | | | 15,000 rpm | |
| 2 | 2 | Rice germ | none | 120 | 4.5 | 10.0 | 0.159 | 5 min 10,000 rpm + 5 min | yes |
| | | | | | | | | 15,000 rpm | |
| 2a | 2 | Rice germ | none | 120 | 4.5 | 10.0 | 0.318 | 10 min 10,000 rpm + 10 min | yes |
| | | | | | | | | 15,000 | |
| 2b | 2 | Rice germ | none | 120 | 4.5 | 10.0 | 0.636 | 10 min 15,000 | yes |
| 2c | 2 | Rice germ | none | 120 | 4.5 | 10.0 | 0.636 | 10 min 10,000 rpm | yes |
| | | | | | | | 0.159 | 5 min 5,000 rpm + 5 min 10,000 rpm | |
| 3 | 3 | Rice germ | none | 150 | 3.5 | 9.7 | 0.159 | 5 min 10,000 rpm + 5 min | yes |
| | | | | | | | | 15,000 rpm | |
| 4 | 4 | Rice germ | Mn | 90 | 4.5 | 7.5 | 0.159 | 5 min 10,000 rpm + 5 min | yes |
| | | | | | | | | 15,000 rpm | |
| 5 | 5 | Rice germ | Zr | 90 | 18 | 4.2 | 0.159 | 5 min 10,000 rpm + 5 min | yes |
| | | | | | | | | 15,000 rpm | |
| 6 | 6 | Mix | | 90 | 7 | 7 | 0.159 | 5 min 10,000 rpm + 5 min | yes |
| | | | | | | | | 15,000 rpm | |
| 7 | 7 | Linseed | none | 70 | 10 | n.d.^{∗} | 0.318 | 5 min 10,000 rpm | no |
| | | | | | | | 0.159 | 3 min | |
| | | | | | | | | 10,000 rpm | |

| | | | | | | | | | |
|---|---|---|---|---|---|---|---|---|---|
| * n.d.: not determined. | | | | | | | | | |

In order to test adhesiveness of the particles in the suspensions made, the suspension was poured into a petri dish, left to dry at ambient conditions for 4 hours, and then rinsed with tap water to remove any surfactant. Then, with a gloved hand, an index finger was pushed into the dried adhesive and the hand was lifted. If the petri dish sticked to the lifted hand (i.e. the adhesive force counteracted the weight of the dish), the particles of oxidized vegetable oil in the suspension were considered adhesive.

The particles in all suspensions made appeared to be adhesive as determined with the above-described test, except for the particles in the suspension made from linseed oil. The particles prepared from linseed oil of linseed were found to be not adhesive.

### EXAMPLE 2

Three different oxidized vegetable oil were prepared as follows.

### Oxidized rice germ oil

Six hundred millilitres of rice germ oil was poured in a glass beaker and heated to an oxidation temperature of 90 °C by placing the beaker in a temperature-controlled oil bath. Pressured air was bubbled through the rice germ oil at a rate of 5 litres per minute under stirring at 80 rpm using a IKA overhead stirrer. The oxidation was continued until a torque of 10 N.cm was achieved. The oxidation was stopped by allowing the oxidized oil to cool to room temperature.

### Oxidized olive oil

Six hundred millilitres of olive oil was poured in a glass beaker and heated to an oxidation temperature of 90 °C by placing the beaker in a temperature-controlled oil bath. Pressured air was bubbled through the rice germ oil at a rate of 5 litres per minute under stirring at 80 rpm using a IKA overhead stirrer. The oxidation was continued until a torque of 10 N.cm was achieved. The oxidation was stopped by allowing the oxidized oil to cool to room temperature.

### Oxidized linseed oil

Six hundred millilitres of linseed oil was poured in a glass beaker and heated to an oxidation temperature of 120 °C by placing the beaker in a temperature-controlled oil bath. Pressured air was bubbled through the rice germ oil at a rate of 5 litres per minute under stirring at 80 rpm using a IKA overhead stirrer. The oxidation was continued until a torque of 10 N.cm was achieved. The oxidation was stopped by allowing the oxidized oil to cool to room temperature.

### Elasticity-adhesiveness test

The elasticity and adhesiveness of the three oxidized vegetable oils was tested as follows.

A flat layer of 2 mm thickness of oxidized vegetable oil was created by putting 5 grams of oxidized oil in a 100 mm diameter petri dish, covering the oil with a sheet of PTFE, placing a steel weight of 300 grams on the sheet and placing the petri dish in an oven at 70 °C for 1 hour to flatten the layer. The flattened layer was then allowed to cool to room temperature.

A steel sphere with a diameter of 2 mm was indented into the layer of oxidized oil at a speed of 200 µm/min to a depth of 1 mm or to a force threshold of 30 mN, whatever occurred earliest. The steel sphere was then retracted at the same velocity. The normal forced exerted on the sphere during approach to and retraction from the layer was recorded using a capacitive load cell located above the indenting sphere.

In Figure 1, approach and retraction curves for oxidized rice germ oil (1a), oxidized olive oil (1b) and oxidized linseed oil (1c) are shown. The approach and retraction curve shows the force exerted on the sphere as function of the distance between the lower end of the sphere and the top of the layer of vegetable oil. A distance of zero means that the lower end of the sphere just touches the layer of vegetable oil.

The adhesive energy is a measure for the adhesiveness of the oxidized oil. The adhesive energy can be determined from the approach and retraction curve as the area between the approach and retraction curves. By comparing Figures 1a, 1b, and 1c, it can be seen that oxidized linseed oil shows the lowest adhesiveness, while oxidized rice germ oil shows the highest adhesiveness.

The film Young's modulus (E) is a measure for the elasticity of the oxidized oil and is calculated by fitting the approach curve at distances less than 0 (contact of the steel sphere with the layer of oxidized oil) to a Hertzian contact model.

The adhesive energy and Young's modulus (E) of the oxidized oils as determined from the approach and retraction curves of Figure 1, is given in Table 3.

**Table 3 - Adhesive and elastic properties of oxidized vegetable oil**

| Starting oil | Iodine value starting oil (g iodine/100g oil) | Polyunsaturated fatty acids (wt%) | Adhesive energy (µJ) | Young's Modulus (kPa) |
|---|---|---|---|---|
| Rice germ oil | 100 | 32 | 15.6 | 7.8 |
| Olive oil | 77 | 11 | 8.5 | 8.7 |
| Linseed oil | 183 | 73 | < 0.1 | 110 |

### EXAMPLE 3

Several aqueous suspensions were prepared from oxidized vegetable oil 1, prepared as described in EXAMPLE 1, at various gap widths as follows.

To an aqueous phase comprising 2 wt% of sodium alginate (ex. Sigma Aldrich) as thickener and 1 wt% Pluronic F-108 (a poly(ethylene glycol)-poly(propylene glycol) triblock copolymer; ex. Sigma Aldrich) as non-ionic surfactant was added 5 wt% of oxidized vegetable oil. The mixture of aqueous phase and oxidized vegetable oil was mixed for 5 minutes in a kitchen blender and the thus-obtained mixture was fed to a rotor-stator dispersing device equipped with a cone mill with a variable gap size (IKA magic LAB^{®} with MKO module).

### Suspension 1:

The mixture of oxidized vegetable oil and aqueous phase with thickener and surfactant was milled using a gap width between rotor and stator of 0.159 mm for 5 minutes at a rotation speed of 10,000 rpm and a further 5 minutes at 15,000 rpm.

### Suspension 2

As suspension 1, except that the gap with was 0.318 mm.

### Suspension 3

As suspension 1, except that the gap with was 0.636 mm.

The particle size distribution of suspensions 1, 2, and 3 was determined by brightfield microscopy using image analysis wherein black and white images of the particles are fitted into an ellipse enclosing the entire particle. The larger axis of the ellipse is the largest diameter of the particle (also referred to as particle length). The D90 values for the particle length (90% of the particles have a length below the D90 value, based on the number of particles with a length above the threshold value of 40 µm) of suspensions 1, 2, and 3 are given in Table 4.

**Table 4 - Particle size distribution of suspensions obtained at different gap sizes**

| | D90 (µm) | D50 (µm) |
|---|---|---|
| Suspension 1 | 1,050 | 525 |
| Suspension 2 | 1,400 | 650 |
| Suspension 3 | 2,700 | 950 |

### EXAMPLE 4

The suspension of oxidized vegetable oil of experiment 1 in EXAMPLE 1 was 10 times diluted with water and then sprayed onto a filter paper (90 mm diameter Whatman Type 1) using an air-operated spray-paint gun (Einhell) obtained from Conrad B.V. The spraying pressure was 1.4 bar (gauge) under continuous airflow, The spraying distance was 25 cm from the filter paper. The amount sprayed was 3 ml (2 x 1.5 ml) diluted suspension per filter paper.

This filter paper was then placed in a 100 mm diameter Petri dish. Ten thrips were placed in the dish and the dish was closed. After 12 hours, three thrips were found immobilized in adhesive particles of the oxidized oil on the filter paper.

## Claims

1. A method for producing an aqueous suspension of adhesive particles comprising:
a) providing a vegetable oil comprising fatty acids chains, wherein the vegetable oil has a iodine value in the range of from 80 to 125, preferably of from 85 to 120, more preferably of from 90 to 115, and wherein at least 15 wt% of the fatty acid chains are polyunsaturated;
b) contacting the vegetable oil with an oxygen-containing gas at an oxidation temperature in the range of from 50 °C to 180 °C to obtain oxidized vegetable oil;
c) allowing the oxidized vegetable oil to cool to a temperature in the range of from 15 to 35 °C to obtain cooled oxidized vegetable oil; and
d) adding the cooled oxidized vegetable oil to an aqueous phase comprising a surfactant and subjecting the aqueous phase with added oxidized vegetable oil to mechanical shear to obtain a suspension of adhesive particles of oxidized vegetable oil, wherein the adhesive particles have a particle size distribution such that, based on the total number of particles with a largest diameter of at least 40 µm, at least 90 % of the particles have a largest diameter of at most 3,000 µm, preferably at most 2,000 µm, and at least 50 % of the particles have a largest diameter of at most 1,000 µm.

2. A method according to claim 1, wherein at least 20 wt% of the fatty acid chains are polyunsaturated, more preferably at least 25 wt%.

3. A method according to claim 1 or 2, wherein the vegetable oil is selected from the group consisting of rice germ oil, rice bran oil, canola oil, castor oil, corn oil, peanut oil, pecan oil, rapeseed oil, sesame oil, and cottonseed oil, preferably is rice germ oil or rice bran oil, more preferably is rice germ oil.

4. A method according to any one of the preceding claims, wherein the oxidation temperature is in the range of from 60 °C to 160 °C, preferably of from 70 °C to 155 °C, more preferably of from 85 °C to 150 °C.

5. A method according to any one of the preceding claims, wherein the oxygen-containing gas is air.

6. A method according to any one of the preceding claims, wherein the vegetable oil is contacted with the oxygen-containing gas in the absence of a drying catalyst.

7. A method according to any one of claims 1 to 5, wherein the vegetable oil is contacted with the oxygen-containing gas in the presence of a drying catalyst, preferably a drying catalyst selected from the group consisting of manganese-based catalysts, iron-based catalysts, and combinations thereof.

8. A method according to any one of the preceding claims, wherein the surfactant is a non-ionic surfactant.

9. An aqueous suspension of adhesive particles obtainable by a method according to any one of the preceding claims.

10. An aqueous suspension of adhesive particles according to claim 9, wherein the aqueous suspension comprises a thickener.

11. A method for trapping plant pests, comprising:
- providing an aqueous suspension of adhesive particles according to claim 9 or 10;
- optionally diluting the suspension with water; and
- applying the optionally diluted suspension on a plant.

12. A method for trapping plant pests according to claim 11, wherein the plants pests are pest insects and/or pest arachnids.

13. A method according to claim 11 or 12, wherein the optionally diluted suspension is applied on the plant by spraying.

14. A method according to any one of claims 11 to 13, wherein the optionally diluted suspension is applied on leaves and/or stems of the plant, preferably on leaves of the plant.
